Europäisches Patentamt

European Patent Office

Office européen des brevets

(11) Veröffentlichungsnummer: **0 307 732**
**A2**

# (12) EUROPÄISCHE PATENTANMELDUNG

(21) Anmeldenummer: 88114326.7

(22) Anmeldetag: 02.09.88

(51) Int. Cl.⁴: **F16H 21/14**

(30) Priorität: 04.09.87 DE 3729568

(43) Veröffentlichungstag der Anmeldung:
**22.03.89 Patentblatt 89/12**

(84) Benannte Vertragsstaaten:
**DE FR GB IT SE**

(71) Anmelder: **Schmidt, Hans-Günter**
**Am Sparrenberg 2a**
**D-4800 Bielefeld(DE)**

(72) Erfinder: **Schmidt, Hans-Günter**
**Am Sparrenberg 2a**
**D-4800 Bielefeld(DE)**

(74) Vertreter: **Hoefer, Theodor, Dipl.-Ing.**
**Kreuzstrasse 32**
**D-4800 Bielefeld 1(DE)**

(54) **Getriebe.**

(57) Bei einem Getriebe als Über- oder Untersetzungsgetriebe zwischen einer Antriebswelle und einer Abtriebswelle mit einem auf der Antriebswelle
eine Außenverzahnung aufweisenden Zahnrad, das
exzentrisch um die Antriebswelle kreisend, jedoch
rotationsfrei, angeordnet ist und mit einer die Zähne
des Kettenzahnrades umschließenden kreisförmigen
Rollenkette, die mit der Abtriebswelle gekuppelt ist,
ist diese Rollenkette (18) mit seitlich vorstehenden
Bolzen (20) ausgestattet, die in Bohrungen (21) einer
mit der Abtriebswelle (14) fest verbundenen Abtriebsscheibe (22) kranzförmig eingesetzt sind. Es ist
dabei bevorzugt, daß antriebsseitig des Kettenzahnrades (16) eine exzentrisch bewegliche Lagerscheibe
(26) auf der Antriebswelle (13) gelagert ist, in deren
Randbereich in kranzförmig angeordneten Bohrungen (28) vorstehende Zapfen (29) drehbar einfassen,
die jeweils exzentrisch an einer Walze (30) befestigt
sind, die jeweils in entsprechende, in der abtriebsseitigen Gehäusehälfte (11) kranzförmig zueinander
angeordneten Bohrungen (31) unter drehbarem
Gleitsitz gelagert sind.

Fig. 2
II : II

## GETRIEBE

Die Erfindung bezieht sich auf ein Getriebe zum Über- oder Untersetzen (zur Drehzahländerung) zwischen einer Antriebswelle und einer Abtriebswelle mit einem inneren Kettenzahnrad, das exzentrisch um die Antriebswelle kreisend - jedoch rotationsfrei - angeordnet ist und mit einer die Zähne des Kettenzahnrades umschließenden, mit der Abtriebswelle gekuppelten kreisförmigen Rollenkette.

Dabei hat das außenverzahnte Kettenzahnrad eine von der Rollenkette differierende (geringere) Zähnezahl, so daß die Zähne des Kettenzahnrades gegenüber den Lücken der Rollenkette versetzt sind. Sie drücken bei ihrer Radialbewegung somit mit ihren Zahnflanken in diese Lücken der Rollenkette derart, daß sich die Rollenkette und damit die damit gekuppelte Abtriebswelle mit einem entsprechenden Unter- oder Übersetzungsverhältnis dreht.

Bei bisher bekannten Getrieben mit einer derartigen endlosen Rollenkette, die sich um das kreisende Kettenzahnrad dreht, werden für die Rollenkette nachteilige Einspann- oder Halteeinrichtungen benötigt, durch die das Getriebe verhältnismäßig groß baut. Diese Halteeinrichtungen sind Sonderbauteile, deren Herstellung aufwendig ist. Hierbei treten auch nachteilige Kettenverformungen auf. Weiterhin ist der Wirkungsgrad derartiger Getriebe aufgrund größerer zu bewegender Getriebeteile ungünstig.

Aufgabe der Erfindung ist es, ein Getriebe der genannten Art zu schaffen, das bei kleinbauender Konstruktion mit vorzugsweise im Handel üblichen Rollenketten ausgestattet ist und einen günstigen Wirkungsgrad bei wenig Verschleißteilen aufweist. Die Rollenketter als Reaktionsglied soll leicht austauschbar sein und wenig Reibung zeigen.

Diese Aufgabe wird bei einem Getriebe der genannten Art dadurch gelöst, daß die Rollenkette als Normrollenkette mit seitlich (einseitig) vorstehenden Bolzen ausgestattet ist, die kranzförmig angeordnet in eine mit der Abtriebswelle festverbundene Abtriebsscheibe eingesetzt sind.

Eine derartige Normrollenkette mit seitlich vorstehenden Bolzen ist ein handelsübliches und damit preiswertes Getriebeteil, das in einfacher Weise ein- und ausgebaut werden kann und nur wenig Raum beansprucht. Sie zeigt einen vorteilhaften niedrigen Reibungskoeffizienten, der durch die arteigene Gelenkigkeit gewährleistet ist. Eine derartige Rollenkette zeigt wenig Masse, so daß ein günstiger Wirkungsgrad sich ergibt. Die Normrollenkette unterliegt keinen nachteiligen Verformungs (Walk-)eigenschaften, die den Wirkungsgrad bei bekannten derartigen Getriebe beeinträchtigt, sondern besitzt eine gute Steifigkeit.

Durch die Kupplung der Rollenkette mit der Abtriebsscheibe mittels darin einfassender, an der Rollenkette seitlich vorstehender, im Abstand zueinander auf einem Kranz angeordneter Bolzen ergibt sich auch eine vorteilhafte Kraftübertragung, die gleichzeitig und mehrfach durch die Bolzen erfolgt. Die Kettenglieder verspannen sich nicht, so daß sich die Rollenketter auch unter Belastung freidrehen kann. Auch unter Vorspannung arbeitet die Rollenkette spielfrei. (rotationssymmetrisch).

Bei einer abgewandelten Ausführungsform ist gemäß der Erfindung zur Lösung der Aufgabe die Rollenkette fest im Getriebegehäuse gelagert und das Kettenzahnrad derart gelagert und mit der Abtriebswelle derart gekuppelt, daß die Zähne des Kettenzahnrades beim wechselweisen Eingriff in die Öffnungen der festliegenden kreisförmigen Rollenkette sich seitlich abdrücken und somit das Kettenzahnrad rotiert und dieses Drehmoment auf die Abtriebswelle überträgt. Dabei kann ein Kettenzahnrad oder es können zwei um 180° gegeneinander versetzt gelagerte Kettenzahnräder vorgesehen sein, deren Zähne nacheinander in die Öffnungen der Rollenkette bzw. der benachbarten Rollenketten einlaufen und sich zur Rotation abdrücken.

Das erfindungsgemäße Getriebe hat somit bei kleinen Abmessungen einen vorteilhaften Wirkungsgrad.

Ein derartiges kleinbauendes Getriebe ist besonders geeignet, bei elektrischen Antrieben verwendet zu werden. So kann die Getriebeeinheit in dem Lagerschild eines Elektromotors Platz finden, ohne dessen Abmessungen wesentlich zu überschreiten.

Auch bei diesem Getriebe ist es möglich, An- bzw. Abtrieb zu vertauschen, um höhere oder niedrigere Drehzahlen oder Drehmomente zu erhalten.

Mit einer derartigen Ausbildung können Getriebe mit niedriger Kettengliedzahl hergestellt werden.

Das Trägheitsmoment des Getriebes kann durch den vergleichbaren geringen Durchmesser der schnellaufenden Glieder klein gehalten werden, so daß sie insbesondere für Antriebe wie Elektromotoren geeignet sind, die schnell anfahren und schnell zum Stillstand gebracht werden sollen.

Wenn auch das Spiel durch die mittels seitlich oder beidseitig (einseitig) vorstehender Bolzen gehaltenen Rollenkette reduziert wird, so treten trotzdem keine übermäßigen Beanspruchungen der Kettenglieder auf.

Mit einem derartigen Getriebe lassen sich weiterhin hohe Übersetzungen, nämlich bis zu 1 : 99 in einer Stufe erzielen. Ein solches Getriebe läuft geräuscharm und vibrationsfrei, insbesondere dann, wenn zwei um 180° versetzte Exzenterscheiben als Treibglieder auf der Antriebswelle rotationsfrei oder rotierend sich bewegen. Es handelt sich um eine vorteilhafte abwälzende Bewegung der Zähne mit der Rollenkette.

Der Schutz erstreckt sich nicht zur auf die Einzelmerkmale, sondern auch auf ihre Kombination.

Weitere Merkmale ergeben sich aus den Unteransprüchen.

Auf der Zeichnung sind Ausführungsbeispiele der Erfindung dargestellt. Es zeigen:

Fig.1 einen Querschnitt durch ein Unter- bzw. Übersetzungsgetriebe mit einer das exzentrisch sich bewegende Kettenzahnrad umgebenden, umlaufenden Rollenkette mit seitlich davon vorstehenden, in die Abtriebsscheibe einfassenden Kupplungsbolzen entsprechend der Schnittlinie I-I in Fig.2;

Fig.2 eine Vorderansicht desselben Unter- bzw. Übersetzungsgetriebes teilweise im Schnitt mit an dem Kettenzahnrad befestigter Lagerscheibe mit Exzenterlagerung im Getriebegehäuse entsprechend der Schnittlinie II-II in Fig.1;

Fig.3 einen Querschnitt durch ein abgewandeltes Getriebe mit zwei Exzenterscheiben und darauf gelagerten Kettenzahnrädern mit umgebenden Rollenketten;

Fig.4 einen Teilschnitt eines weiteren abgeänderten Getriebes mit einer außenseitigen festen Lagerscheibe, an der das Kettenzahnrad elastisch mittels eines Gummiringes verbunden ist;

Fig.5 einen Teilschnitt durch dasselbe Getriebe mit abgewandelter Schwingbolzenverbindung;

Fig.6 einen Teilquerschnitt durch ein weiteres Ausführungsbeispiel mit abgefederter Kugelkupplung zwischen rotierendem Kettenzahnrad und Abtriebswelle bei festgelegter Rollenkette;

Fig.7 ein weiteres Ausführungsbeispiel einer Kugelkupplung zwischen Gehäuse und Kettenzahnrad im Querschnitt;

Fig.8 einen Querschnitt mit einem weiteren Ausführungsbeispiel mit an der Kette angeordneter Kugelaufnahmepfanne und kreisförmiger Führung in der Gehäusehälfte.

Mit (10) und (11) sind zwei äußere Häflten eines feststehenden Getriebegehäuses bezeichnet, zwischen denen ein zylinderförmiges Rohrteil (12) angeordnet ist. In den Hälften (10, 11) ist einerseits eine Antriebswelle (13) und gegenüberliegend andererseits gleichgerichtet eine Abtriebswelle (14) frei drehbar mittels üblicher Gleit- oder Walzlager gelagert. Die Gehäusehälften (10, 11) können mit dem Rohrteil (12) verschraubt sein.

Innenseitig trägt die Antriebswelle (13) einen Exzenter (15), auf dem ein als Treiber ausgebildetes Kettenrad (16) sich rotationsfrei derart bewegt, daß ein Außenkranz des Kettenrades (16) mit seinen Zähnen (17) sich auf einer elliptischen Bahn bewegen kann. Gegenüber diesem Kettenrad (16) dreht sich die Antriebswelle (13) frei, während das Kettenrad (16) selbst gegen Drehung gehalten ist.

Eine endlose Rollenkette, vorzugsweise Normrollenkette, (18) ist kreisförmig um die Zähne (17) des Kettenrades (16) gelagert, in deren Öffnungen (Lücken) (19) die Zähne (17) wechselweise einfassen. Dabei findet eine abwälzende Gleitbewegung statt. Die Normrollenkette (18) hat beispielsweise ein Kettenglied mehr als der Außenzahnkranz des Kettenrades (16) Zähne (17) hat, so daß dadurch mit der Bewegung des Kettenrades (16) die Normrollenkette (18) entgegen der Drehung des Kettenrades (16) sich dreht.

Die Normrollenkette (18) trägt seitlich einseitig zur Abtriebsseite vorstehende Bolzen (20), die ihrerseits in Bohrungen (21) auf dem Umfang einer Abtriebsscheibe (22) einfassen. Die Bohrungen (21) sind kranzförmig auf der Abtriebsscheibe (22) in deren Außenbereich in gleichen Abständen voneinander eingearbeitet. Die Bolzen (20) lagern in diesen Bohrungen (21) unter Gleitsitz.

Die Abtriebsscheibe (22) ist im Querschnitt beispielsweise trapezförmig derart ausgebildet, daß schräge Stirnflächen (23) mittels Kugeln (24) gegenüber der entsprechenden Schrägfläche (23) im Getriebegehäuse (10) kugelgelagert sind. Weiterhin ist es bevorzugt, auch seitlich diese Abtriebsscheibe (22) mittels Wälzlagern (25) im benachbarten Teil des feststehenden Abtriebsgehäuses (10) zu lagern. Zentrisch ist an dieser Abtriebsscheibe (22) die Abtriebswelle (14) befestigt, die in üblicher Weise mittels Wälzlagern o.dgl. im Gehäuse (10) gelagert ist.

Zur begrenzten Festlegung des Kettenrades (16) in seiner Mitnahmebewegung kann eine Lagerscheibe (26) an der Innenseite des antriebsseitigen zylinderförmigen Getriebegehäuses (12) gelagert sein, die mit dem Kettenrad (16) mittels Bolzen (27), Schrauben o.dgl., verbunden ist und sich mit gleicher Exzenterbewegung - auch rotationsfrei - bewegt.

Zur Festlegung der Lagerscheibe (26) im zylinderförmigen Getriebegehäuse (12) sind kranzförmig in ihrem äußeren Bereich Bohrungen (28) eingearbeitet, in die jeweils vorstehende Zapfen (29) einfassen, die jeweils exzentrisch an einer Walze (30), Rolle o.dgl., befestigt sind, die ihrerseits in entsprechenden Bohrungen (31) unter Gleitsitz oder Wälzsitz in dem zylinderförmigen Rohrteil (12) des Getriebegehäuses (10) gelagert sind. Die Zapfen (29) bewegen sich kreisförmig seitlich der Walze (30) und führen damit auch das Kettenrad (16), dessen Zähne (17) auf einer elliptischen Bahn sich bewegen und in die Öffnungen (Lücken) (19) der kreisförmig umlaufenden Rollenkette (18) einfassen und diese damit unter gleichbleibendem Formschluß in entgegengesetzter Richtung drehen (drücken).

Zur Verlängerung der Antriebswelle (13) in Richtung Abtrieb schließt sich an den Exzen-ter (15) ein Lagerzapfen (32) an, der in eine Bohrung (33) der Abtriebsscheibe (22) entgegen der Abtriebsbewegung lagert.

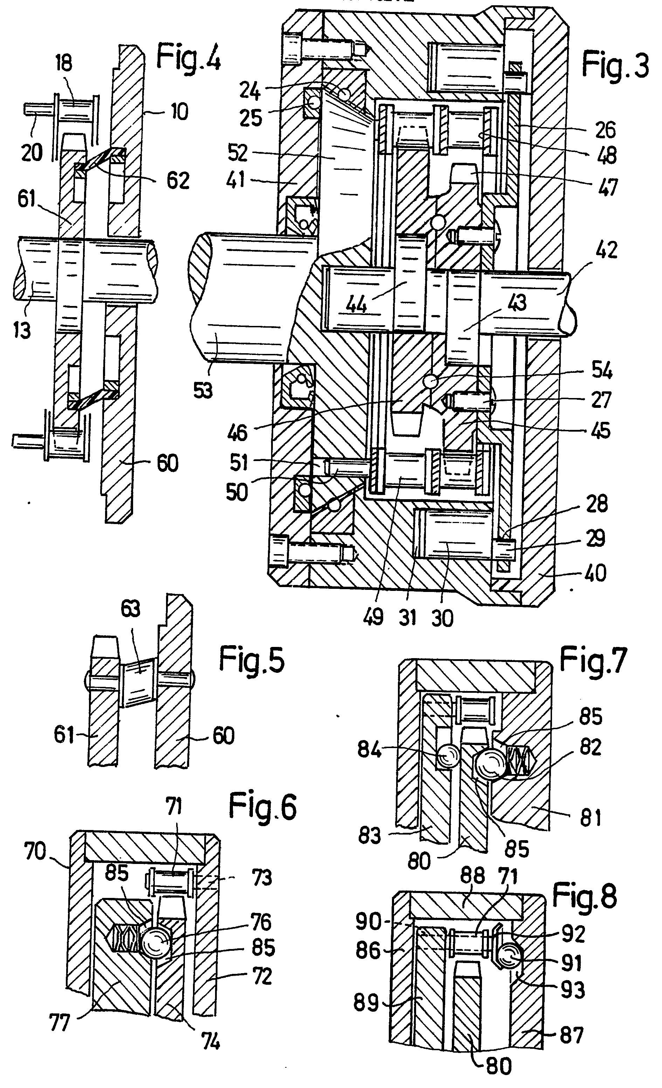

In dem mehrteiligen Getriebegehäuse (40, 41) gemäß Fig.3 ist eine Antriebswelle (42) zentral gelagert, auf der zwei sich gegenüberliegende (um 180° versetzte) Exzenter (43, 44) befestigt sind. Auf diesen beiden Exzentern (43, 44) bewegen sich mit Wälz- oder Gleitsitz zwei Kettenzahnräder (45, 46), deren jeweils in einem Außenkranz angeordnete Zähne (47) in zwei Normrollenketten (48 und 49) derart formschlüssig einfassen, daß bei der exzentrischen - aber rotationsfreien - Bewegung der Kettenräder (45, 46) und damit der Zähne (47) die Normrollenketten (48, 49) als eine Einheit in entgegengesetzter Richtung bewegt (gedrückt) werden.

Zum Kuppeln der beiden Normrollenketten (48, 40) fassen in jeweils in einem Außenkranz jedes Kettenrades (45, 46) abtriebsseitig gelagerte verlängerte Bolzen (50) der Abtriebsscheibe (52), die jeweils randseitig in einem Außenkranzbereich angeordnet sind und damit die kraftschlüssige Verbindung zwischen der Antriebswelle (42) und der an der Abtriebsscheibe (52) befestigten Abtriebswelle (53) im Übersetzungsverhältnis herstellt.

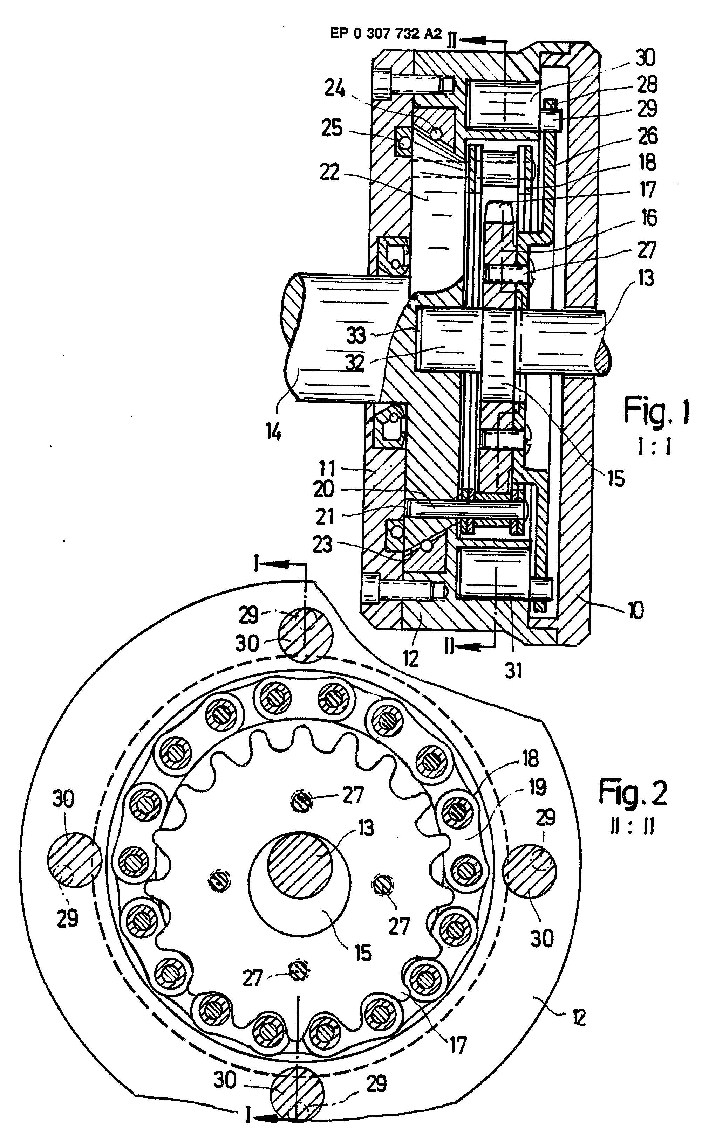

Die Abtriebsscheibe (52) und die Abtriebswelle (53) sind in gleicher Weise wie bei der vorbeschriebenen Ausführung gemäß Fig.1 mittels Wälzlagern o.dgl. gelagert.

Die Kettenzahnräder (45, 46) auf der Antriebswelle (42) sind im äußeren Bereich der Lagerscheibe (26) ebenfalls wie in Fig.1 beschrieben gehalten.

Die Kettenräder (45, 46) sind vorzugsweise handelsübliche Einzelräder, die an ihren zugewandten Seiten mittels Kugeln (54), welche am Umfang verteilt angeordnet sind, gegeneinander gehalten und gemeinsam angetrieben werden.

Bei der vorbeschriebenen Ausbildung mit zwei gegeneinander versetzten Exzenterscheiben (43, 44) treten nur kleine Unwuchten auf, so daß derartige Getriebe einen besonderes ruhigen und geräuscharmen Lauf zeigen. Es ist bevorzugt, daß Ausgleichsmassen aus Gründen der Laufruhe vorgesehen sind.

Bei den Ausführungsbeispielen gemäß Fig.4 und 5 ist im Gegensatz zu den Ausführungen der Fig.1 bis 3 die Lagerscheibe (60) fest im Getriebegehäuse (10) angeordnet.

Das sich exzentrisch - aber rotationsfrei - bewegende Kettenzahnrad (61) ist an der Lagerscheibe (60), die in diesem Falle von dem Getriebegehäuse (10) gebildet ist, mittels einer elastischen Gummimanschette (eines Gummiringes) eines entsprechenden Kunststoffbauteils aus Polyurethan (62) o.dgl. (Fig.4) bzw. einer Anzahl von Schwingbolzen ( 63) (Fig.5) in Kreisform beweglich derart gelagert, daß das Kettenzahnrad (61) trotz seiner exzentrischen Bewegung gegenüber dr Lagerscheibe (60) lagehaltend abgestützt ist.

Bei dem Ausführungsbeispiel gemäß Fig.7 ist das Kettenzahnrad (80) gegenüber der festen Lagerscheibe (81) mittels eines Kranzes abgefederter Kugeln (82) abgestützt, wobei in der Abtriebsscheibe (83) eine Anzahl von Gegendruckkugeln (84) (auf Kreisbogen) gelagert ist, die jeweils genau gegenüber einer abgefederten Kugel (82) sich frei drehen und damit dem Kettenzahnrad (80) die lagererhaltende Führung geben. Zur Aufnahme der Kugeln (76 und 82) der Fig.6 und 7 sind entsprechende trapezförmige Ausnehmungen (85) in den Zahnrädern (74 und 80), sowie einerseits in der Abtriebsscheibe (77) und andererseits in der Lagerscheibe (81) angeordnet. Dabei sind die Ausnehmungen (85) radial gegenüber dem Kugel-Durchmesser der Exzenterbewegung vergrößert angepaßt.

Demgegenüber zeigt Fig.6 ein weiter abgewandeltes Ausführungsbeispiel, bei dem in dem Getriebegehäuse (70) die Normalrollenkette (72) in Kreisform an der festen Lagerscheibe (72), die ebenfalls vom Gehäuse (10) gebildet ist, mittels seitlich vorstehender Bolzen (73) unbeweglich befestigt ist. In die Öffnungen der Normrollenkette (71) fassen entsprechend der exzentrischen Bewegung des Kettenzahnrades (74) dessen Zähne (75). Dabei werden jedoch im Gegensatz zu der Bewegung der Normrollenkette gemäß Fig.1 bis 5 und 7 die Zähne (75) des Kettenzahnrades (74) seitlich abgedrückt, so daß in diesem Falle das Kettenzahnrad (74) rotiert und damit über die kuppelnde abgefederte Kugel (76) (angeordnet in Kreisform) die Abtriebscheibe (77) und damit die Abtriebswelle (14) mitgenommen wird.

In ihrem grundsätzlichen Aufbau stimmen alle Ausführungsbeispiele (mit den Exzentern auf der Antriebswelle usw.) überein.

Das außenverzahnte innere Kettenzahn-rad, das auf der Antriebswelle exzentrisch kreist, hat von der Rollenkette eine differierende Zähnezahl und zwar mindestens einen Zahn weniger. Es liegt also nicht zwischen jedem Zahn des Kettenzahnrades eine Rolle der Rollenkette, sondern Zähne des Kettenzahnrades sind gegenüber den Zahnlücken der Rollenkette versetzt und sie drücken mit ihren Zahnflanken in diese Zahnlücken, so daß die Rollenkette von diesen Zahnflanken seitlich weggeschoben werden, und somit die Rollenkette (Fig.1 bis 5 und 7) bzw. das Kettenzahnrad (Fig.6) sich verdrehen.

Die von den Druckflächen in die Rollenketten hineingedrückten Zähne bilden gleichzeitig eine Bremseinrichtung, da sie von der Druck-fläche in der Verzahnung gehalten werden und dadurch ein Verdrehen der Abtriebswelle unterbindet. Das Kettenzahnrad ist als Scheibe ausgebildet und bewegt sich auf elliptischer Bahn.

Die in Fig.4 und 5 beschriebenen Ausführungsformen sind insbesondere für kleine Getriebe bevorzugt, die nur kurzzeitig jeweils in Betrieb sind.

Anstelle der in Fig.7 dargestellten beiden, sich etwa gegenüberliegenden Kugeln (81, 84) kann auch ein das Kettenrad (80) durchsetzender Kugelkranz (nicht dargestellt) vorgesehen sein, dessen beidseitig vorstehende Kugelflächen sich einerseits an der Gehäusehälfte (81) bzw. anderseitig an der Abtriebsscheibe (83) abstützen.

Bei einem weiteren Ausführungsbeispiel kann sich die Rollenkette exzentrisch so bewegen, daß deren Rollen nacheinander in ein innen- oder außengezahntes Kettenrad einfassen.

Anstelle einer Rollenkette kann für spezielle Anwendungen eine Kette mit starren Bolzen verwendet werden.

Bei einem weiteren Ausführungsbeispiel gemäß Fig.8 ist das Kettenzahnrad (80) frei drehbar und als Abtriebsscheibe mit oder ohne Axialkraft aufnehmende Kugeln ausgeführt.

Auf den Exzenterscheiben (43, 44) ist hierbei die Abtriebsscheibe (89) angeordnet, welche die mittels überstehenden Bolzen (90) und Klemm- bzw. Schrumpfring befestigte Rollenkette (71) trägt. An den zur Gehäusehälfte (87) zeigenden Enden der Kettenbolzen sind Kugelaufnahmepfannen (929 einzeln oder in einem Ringgebilde eingepreßter Mehrzahl derselben derart angeordnet, daß sie mittels einiger Kugeln (91) mit einem mit dem Gehäuse teil (87) verbunden oder in demselben eingearbeiteten Gegenstück exzentrisch und kraftschlüssig in Eingriff stehen. Dabei ist es bevorzugt, daß die Kugelaufnahmepfannen (92) einzeln oder als Ganzes ringförmig elastisch derart angeordnet und ausgebildet sind, daß sich sogenannte Überbestimmungen in den Grenzen der Federkennlinien eliminieren.

Die elastische Komponente kann hierbei ein z.B. als Lochscheibe ausgeführtes Kunststoffteil oder die entsprechend ausgebildete Kugelaufnahmepfanne (92) bzw. eine Kombination aus beiden sein.

Die Gehäusehälften (86, 87) sowie das sie auf Distanz haltende zylinderförmige Rohrteil (88) und die Abtriebsscheibe (89) sind dabei koaxial angeordnet. Auf der zur Gehäusehälfte (87) zeigenden Seite der Abtriebsscheibe (89) ist - wie vorbeschrieben - die Rollenkette (71) in Kreisform mittels vorstehender Bolzen (90) befestigt, an deren vorstehenden Enden jeweils die eine Kugel (91) aufnehmende kreis- und im Querschnitt trapezförmige Kugelaufnahmepfanne (92) angeordnet ist. Diese Kugelaufnahmepfanne (92) kann z.B. auf den Bolzen (90) aufgepreßt sein. Zur Aufnahme der Kugel (91) auf der Gegenseite weist die Gehäusehälfte (87) auf ihrer Innenseite eine kreisringförmige, im Querschnitt trapez-förmige Ausnehmung (93) auf. Dabei sind die Ausnehmung (93) und die der Kugelaufnahmepfanne (92) entsprechend der Ausführung gemäß Fig.7 radial gegenüber dem Kugel-Durchmesser der Exzenterbewegung vergrößert angepaßt.

## Ansprüche

1. Getriebe als Über- oder Untersetzungsgetriebe zwischen einer Antriebswelle und einer Abtriebswelle mit einem auf der Antriebswelle eine Außenverzahnung aufweisenden Zahnrad, das exzentrisch um die Antriebswelle kreisend, jedoch rotationsfrei, angeordnet ist und mit einer die Zähne des Kettenzahnrades umschließenden kreisförmigen Rollenkette, die mit der Abtriebswelle gekuppelt ist, dadurch gekennzeichnet, daß die Rollenkette (18) mit seitlich vorstehenden Bolzen (20) ausgestattet ist, die in Bohrungen (21) einer mit der Abtriebswelle (14) fest verbundenen Abtriebsscheibe (22) kranzförmig eingesetzt sind.

2. Getriebe nach Anspruch 1, dadurch gekennzeichnet, daß die Rollenkette (18) eine Normrollenkette ist.

3. Getriebe, insbesondere nach Anspruch 1 oder 2, dadurch gekennzeichnet, daß antriebsseitig des Kettenzahnrades (16) eine exzentrisch bewegliche Lagerscheibe (26) auf der Antriebswelle (13) gelagert ist, in deren Randbereich in kranzförmig angeordneten Bohrungen (28) vorstehende Zapfen (29) drehbar einfassen, die jeweils exzentrisch an einer Walze (30) befestigt sind, die jeweils in entsprechende, in der abtriebsseitigen Gehäusehälfte (1) kranzförmig zueinander angeordneten Bohrungen (31) unter drehbarem Gleitsitz gelagert sind.

4. Getriebe nach Anspruch 1 bis 3, dadurch gekennzeichnet, daß die Bohrungen (31) mit Walzen (30) in einem Rohrteil (12) (Gehäusekranz) eingearbeitet sind, der die Rollenkette (18) mit Abstand umgibt.

5. Getriebe nach Anspruch 1, dadurch gekennzeichnet, daß das Kettenzahnrad (18) als Doppelzahnrad (45, 46) ausgebildet ist, deren Außenverzahnungen (47) um 180° (exzentrisch) gegeneinander versetzt sind.

6. Getriebe nach Anspruch 1 bis 5, dadurch gekennzeichnet, daß die beiden Kettenzahnräder (45, 46) mittels Bolzen (50), Kugeln (54) o.dgl. miteinander gekuppelt sind.

7. Getriebe nach Anspruch 1 bis 6, dadurch gekennzeichnet, daß die Kettenzahnräder (45, 46) mittels exzentrisch geführter Kugeln (54) gekoppelt sind.

8. Getriebe nach Anspruch 1 bis 7, dadurch gekennzeichnet, daß die Kugeln (76, 82, 84) abgefedert gelagert sind.

9. Getriebe nach Anspruch 1 bis 8, dadurch gekennzeichnet, daß die Abtriebsscheibe (22) im Querschnitt trapezförmig ausgebildet ist und im Bereich ihrer schrägen Stirnflächen (23) mittels Kugeln (24) in der abtriebsseitigen Gehäusehälfte (11) gelagert ist.

10. Getriebe nach Anspruch 1 bis 9, dadurch gekennzeichnet, daß seitlich der schrägen Stirnfläche (23) ein Wälzlager (25) an der Abtriebsscheibe (22) angeordnet ist.

11. Getriebe nach Anspruch 1, dadurch gekennzeichnet, daß an beiden Seiten der Rollenkette (18) Bolzen (20, 73) vorstehen, wobei die abtriebsseitigen Bolzen (20) in Bohrungen (21) der Abtriebsscheibe (22) und/oder die antriebsseitigen Bolzen in die Gelenköffnungen der benachbarten Rollenkette (48) bzw. die feste Gehäusehälfte (10) einfassen.

12. Getriebe nach Anspruch 11, dadurch gekennzeichnet, daß die Bolzen (20, 73) als einseitige oder doppelseitige Verlängerung jeweils eines Bolzens der Rollenkette (18) ausgebildet sind.

13. Getriebe nach Anspruch 1 bis 12, dadurch gekennzeichnet daß die Kettenräder (45, 46) mittels elastischer Schwingeinrichtungen aus Metall, Kunststoff, Gummi o.dgl. beweglich an der Gehäusehälfte (10) abgestützt sind.

14. Getriebe nach Anspruch 1 bis 13, dadurch gekennzeichnet, daß die Kettenzahnräder (18) aus einer Mehrzahl gestanzter Scheiben aus Blech o.dgl. gebildet sind.

15. Getriebe nach Anspruch 13, dadurch gekennzeichnet, daß als elastische Schwingeinrichtung eine Ring-Manschette (62) bzw. kranzförmige angeordnete Schwingbolzen (63) eingeschaltet sind.

16. Getriebe, insbesondere nach Anspruch 1, dadurch gekennzeichnet, daß die Rollenkette (71) fest an der Gehäusehälfte (72) gelagert ist und das Kettenzahnrad (74) kraftschlüssig mit der Abtriebsscheibe (77) gekuppelt ist.

17. Getriebe nach Anspruch 1 bis 16, dadurch gekennzeichnet, daß das Kettenrad (80) mittels mehrere kranzförmig angeordnete, das Kettenrad (80, 81) durchfassender, seitlich vorstehender Kugeln im Abstand gegenüber der Gehäusehälfte (10) und der Abtriebsscheibe (22, 52, 77, 83) gehalten ist.

18. Getriebe nach den Ansprüchen 1 bis 3, dadurch gekennzeichnet, daß auf der Rollenkette (71) an vorstehenden Bolzen (90) Kugelaufnahmepfannen (92) mit darin gelagerten Kugeln (91) angeordnet sind, die in eine ringförmige Ausnehmung (93) der Gehäusehälfte (87) einfassen.

Fig. 1
I : I

Fig. 2
II : II

Fig.3

Fig.4

Fig.5

Fig.6

Fig.7

Fig.8